# EUROPÄISCHE PATENTANMELDUNG

(11) **EP 2 372 876 A1**
(43) Veröffentlichungstag der Anmeldung: **05.10.2011**
(21) Anmeldenummer: 10003371.1
(22) Anmeldetag: 29.03.2010
(51) Int. Cl.: H02K 3/24

(54) **Kühlschlitz für Wicklungsstab**

(71) Anmelder: SIEMENS AKTIENGESELLSCHAFT, 80333 München (DE)
(72) Erfinder: Hoenig, Christian, 44869 Bochum (DE)

(57) **Zusammenfassung**

Die Erfindung betrifft eine Wicklung für eine elektrische Maschine (1), insbesondere einen Turbogenerator, mit mehreren übereinander angeordneten Leiterstäben (5), wobei die Leiterstäbe (5) jeweils einen Kühlungsschlitz (11) aufweisen, wobei die Kühlungsschlitze (11) verjüngt oder erweitert ausgebildet sind, wobei in einem Übergangsbereich eine Stufe zur Verwirbelung eines Kühlmediums ausgebildet ist.

## Beschreibung

Die Erfindung betrifft eine Wicklung für eine elektrische Maschine, mit mehreren übereinander angeordneten Leiterstäben, wobei die Leitungsstäbe jeweils einen in eine Tiefenrichtung ausgebildeten Kühlungsschlitz aufweisen.

Des Weiteren betrifft die Erfindung ein Verfahren zur Herstellung eines Kühlungsschlitzes eines Leiterstabes für eine elektrische Maschine.

Eine elektrische Maschine, wie beispielsweise ein Turbogenerator, ist aus der EP 1 742 330 A1 bekannt. Solch eine elektrische Maschine weist einen antreibbaren, drehbeweglich gelagerten Rotor, der auch Läufer genannt wird, und einen den Rotor umgebenden ortsfesten Stator, der auch Statorteil genannt wird, auf. Der Rotor umfasst eine zylinderförmige Rotorwelle, die sich in Wellenlängsrichtung mittig zu einem Rotorballen verdickt. Der Rotorballen wird auch als Läuferballen bezeichnet. Auf dem Rotorballen ist eine mit einem Strom beaufschlagbare Erregerwicklung angeordnet. Der Stator weist eine Statorwicklung auf. Zur Erzeugung von elektrischer Energie ist die Rotorwelle mit einem Antrieb, insbesondere mit einer Antriebswelle einer Turbine, gekoppelt. Auf diese Weise lässt sich der Rotor in eine Drehbewegung gegenüber dem ortsfesten Stator versetzen. Wird dabei der Rotor von einem Strom durchflossen, so wird ein magnetisches Drehfeld erzeugt, das in der Statorwicklung einen elektrischen Strom induziert. Heutzutage weist ein Turbogenerator eine elektrische Leistung zwischen 100 und 1500 Megawatt auf.

Es ist des Weiteren bekannt, den Zylindermantel des Rotorballens mit in Wellenlängsrichtung verlaufenden und in Umfangsrichtung zueinander beabstandeten Nuten zu versehen und die Erregerwicklung in diesen Nuten anzuordnen. In den Nuten sind dazu eine Mehrzahl von in Wellenlängsrichtung verlaufenden und gegeneinander isolierten Leiterstäben übereinander gestapelt. Zur Zylindermantelfläche des Rotorballens hin ist ein in eine Profilierung eingeschobener Nutverschlusskeil zum Absichern der Leiterstäbe gegen die bei der Umdrehung des Rotors herrschenden Fliehkräfte vorgesehen. Bei einem Turbogenerator besteht das Bestreben, eine möglichst hohe elektrische Leistung zu erreichen. Die erreichbare elektrische Leistung eines Turbogenerators hängt unter anderem von der Magnetfeldstärke des magnetischen Drehfeldes ab, das von der Erregerwicklung des Rotors erzeugt wird. Je höher die Magnetfeldstärke, desto höher ist entsprechend die elektrische Leistung des Turbogenerators.

Da die Leiterstäbe im Betrieb durch die elektrischen Ströme stark erwärmt werden, müssen sie gekühlt werden. Dazu ist es bekannt, die Leiterstäbe mit Luft, Gas oder Wasser zu kühlen. Dabei werden die aus einem leitfähigen Material, insbesondere Kupfer, ausgebildeten Leiterstäbe mittels Bohrungen versehen, wobei durch diese Bohrungen ein Kühlungsmedium strömt. Es sind radial ausgerichtete und auch axial ausgerichtete Kühlungspfade in den Leiterstäben bekannt. Beispielsweise werden Kühlungspfade in axialer oder radialer Richtung derart ausgebildet, dass in die übereinander angeordneten Leiterstäbe ein Schlitz eingefräst wird, durch den ein Kühlungsmedium strömen kann. Damit der Wärmeübertrag möglichst groß ist, werden diese Schlitze gestuft ausgeführt, damit an der Stufe eine Verwirbelung des Kühlmediums stattfindet und somit ein Wärmeübergangskoeffizient erhöht wird, was zu einer besseren Kühlung führt.

Allerdings wird durch eine solche Stufe die Herstellung des Kühlungsschlitzes vergleichsweise kostenaufwändig, da die Stufe durch eine Fräsung erfolgt. Des Weiteren ist solch eine Herstellung vergleichsweise zeitaufwändig. Wünschenswert wäre es, einen Kühlungspfad im Leiterstab schnell und kostengünstig herstellen zu können.

Daher ist es Aufgabe der Erfindung, eine Wicklung anzugeben, die günstig und schnell hergestellt werden kann.

Gelöst wird diese Aufgabe durch eine Wicklung für eine elektrische Maschine, mit mehreren übereinander angeordneten Leiterstäben, wobei die Leiterstäbe jeweils einen in eine Tiefenrichtung ausgebildeten Kühlungsschlitz aufweisen, der zumindest abschnittsweise in Tiefenrichtung kontinuierlich verjüngt oder erweitert ausgebildet ist.

Die Erfindung geht somit einen anderen Weg, als es durch die Ausführung mit einer gefrästen Stufe im Schlitz vorsieht. Eine Stufe in dem Kühlungsschlitz ist demnach nicht mehr vorgesehen. Vielmehr wird der Kühlungsschlitz im Wesentlichen durch einen Herstellungsschritt derart ausgeführt, dass die Begrenzungswand der Kühlungspfadwände schräg zu einer axialen Richtung ausgebildet ist. Da die Leiterstäbe übereinander angeordnet werden, entstehen an den Übergängen zwischen den einzelnen Leiterstäben einzelne Stufen, an der das Kühlmedium lokal umgelenkt und verwirbelt wird. Dies führt zu einer besseren Wärmeübertragung des Kühlungsmediums auf den Leiterstab.

Vorteilhafte Weiterbildungen sind in den Unteransprüchen angegeben.

Ein Vorteil der Erfindung ist, dass eine schräg zur axialen Richtung ausgebildete Kühlungsschlitzbegrenzungswand vergleichsweise leicht hergestellt werden kann. Eine Möglichkeit, solche eine schräge Strömungspfadbegrenzungswand auszubilden, ist beispielsweise durch eine Fräsung oder durch eine Wasserstrahltrennung möglich.

In einer ersten vorteilhaften Weiterbildung wird der Kühlungsschlitz durch zumindest eine in Tiefenrichtung geradlinig verlaufende Begrenzungswand begrenzt. Das bedeutet, dass im Querschnitt gesehen, der Kühlungspfad im Wesentlichen eine sägezahnähnliche Struktur erhält. Eine geradlinig ausgebildete Begrenzungswand lässt sich vergleichsweise günstig und schnell herstellen.

In einer weiteren vorteilhaften Weitergestaltung wird der Kühlungsschlitz durch zumindest eine in Tiefenrichtung konkav oder konvex verlaufende Begrenzungswand begrenzt. Je nach vorhandenen Strömungsphänomenen kann eine konkav oder konvex ausgebildete Begrenzungswand den Wärmeübertrag an den Übergängen zwischen den einzelnen Leiterstäben erhöhen. Eine konvexe oder konkave Begrenzungswand kann eine Strömung beschleunigen oder abbremsen. Solche Abgrenzungen beschleunigen oder verzögern die Strömungsgeschwindigkeit des Kühlungsmediums. Es ist auch denkbar, abwechselnd die Begrenzungswand von Leiterstab zu Leiterstab zu ändern. Ein erster Leiterstab wird hierbei konkav und der benachbarte Leiterstab konvex ausgebildet und der übernächste Leiterstab wieder konkav und der überübernächste Leiterstab wieder konvex.

In einer vorteilhaften Weiterbildung sind die Dimensionen der Kühlungsschlitze und der schräg angeordneten Begrenzungswand derart, dass in einem Übergangsbereich zwischen zwei Kühlungsschlitzen von zwei benachbarten Leiterstäben eine Stufe ausgebildet ist. In einer vorteilhaften Weiterbildung ist der Kühlungsschlitz durch zumindest eine in Tiefenrichtung konisch verlaufende Begrenzungswand ausgebildet.

Eine konisch verlaufende Begrenzungswand lässt sich vergleichsweise einfach herstellen.

In einer weiteren vorteilhaften Weiterbildung ist der Kühlungsschlitz länglich an der einen Oberfläche mit der Breite C und an der gegenüberliegenden Fläche mit der Breite D ausgebildet, wobei das Verhältnis ^{C}/_{D} zwischen ¹/_{0,5} und ¹/_{0,8} liegt. Insbesondere liegt dieser Wert zwischen ¹/_{0,4} und ¹/_{0,9}, insbesondere bei ¹/_{2/3}.

Die Erfindung wird anhand eines Ausführungsbeispiels näher erläutert. Die Figuren zeigen in schematischer Weise:
- Figur 1: einen Ausschnitt eines Rotors;
- Figur 2: eine Querschnittansicht mehrerer Leiterstäbe;
- Figur 3: eine perspektivische Ansicht der Kühlungsschlitze;
- Figur 4: eine Seitenansicht der Kühlungsschlitze;
- Figur 5: eine Seitenansicht eines einzelnen Kühlungsschlitzes;
- Figur 6, 7: Schnittdarstellung der Figuren 4 und 5;
- Figur 8: eine Draufsicht von oben auf einen Teil eines Leiterstabes.

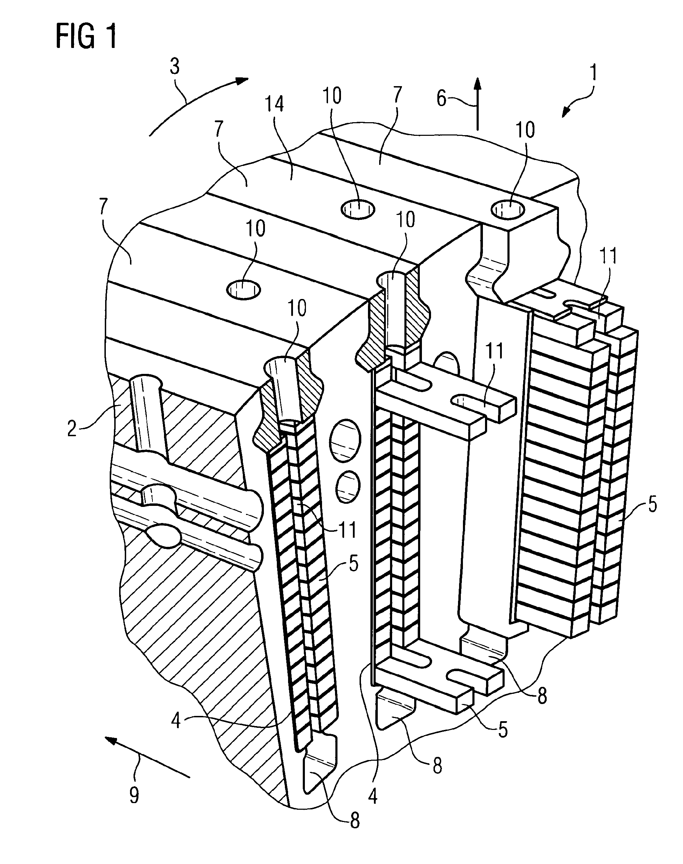

Figur 1 zeigt eine teilweise perspektivische Ansicht eines Rotors 1 einer elektrischen Maschine. Der Rotor 1 umfasst einen um eine nicht näher dargestellte Rotationsachse einen Läuferballen 2, in denen in Umfangsrichtung 3 mehrere Nuten 4 angeordnet sind. Die Nuten 4 sind in Umfangsrichtung 3 verteilt und erstrecken sich von dem einen Ende des Läuferballens 2 zum anderen Ende des Läuferballens 2 und somit im Wesentlichen parallel zur Rotationsachse ausgerichtet ausgebildet. In den Nuten 4 sind Leiterstäbe 5 übereinander angeordnet. Im Betrieb rotiert der Rotor 1 mit einer vergleichsweise hohen Umdrehungszahl von 3600 U/min bzw. 3000 U/min. Da die einzelnen Leiterstäbe 5 in Folge der Fliehkräfte in radialer Richtung 6 aus den Nuten 4 bewegt werden würden, ist ein jeweiliger Verschlusskeil 7 angeordnet, der entgegen der Fliehkräfte wirkt. Über einen Nutgrundkanal 8, der in axialer Richtung 9 verläuft, kann ein Kühlmedium, wie z. B. Luft, Gas, Stickstoff oder ggf. Wasser strömen. Über radiale Kühlungspfade 10 strömt das Kühlungsmedium aus dem Rotor 1 heraus. Im Betrieb werden die Leiterstäbe 5 mit einem elektrischen Strom beaufschlagt. Da die elektrischen Ströme vergleichsweise groß sind führt dies zu einer Erwärmung des Leiterstabes 5. Mit Hilfe des in dem radialen Kühlungspfad 10 strömenden Kühlmediums wird der Leiterstab 5 gekühlt. Der radiale Kühlungspfad 10 wird mit Hilfe von Kühlungsschlitzen 11, die in den einzelnen Leiterstäben 5 angeordnet sind, realisiert.

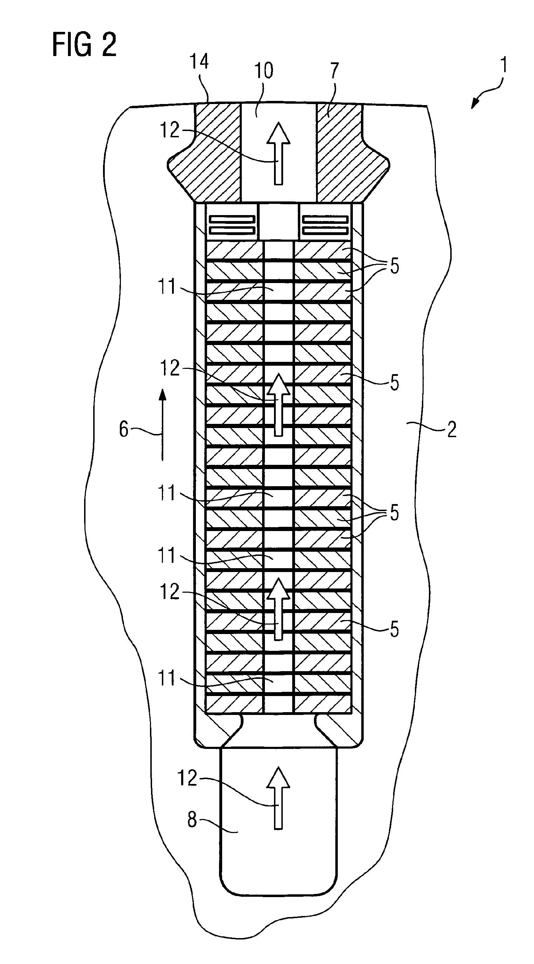

In der Figur 2 ist eine Querschnittsansicht einer Nut 4 mit übereinander angeordneten Leiterstäben 5 dargestellt. Über den Nutgrundkanal 8 strömt ein Kühlmedium und entweicht in einer Strömungsrichtung 12 in radialer Richtung 6 aus dem Rotor 1 wieder hinaus.

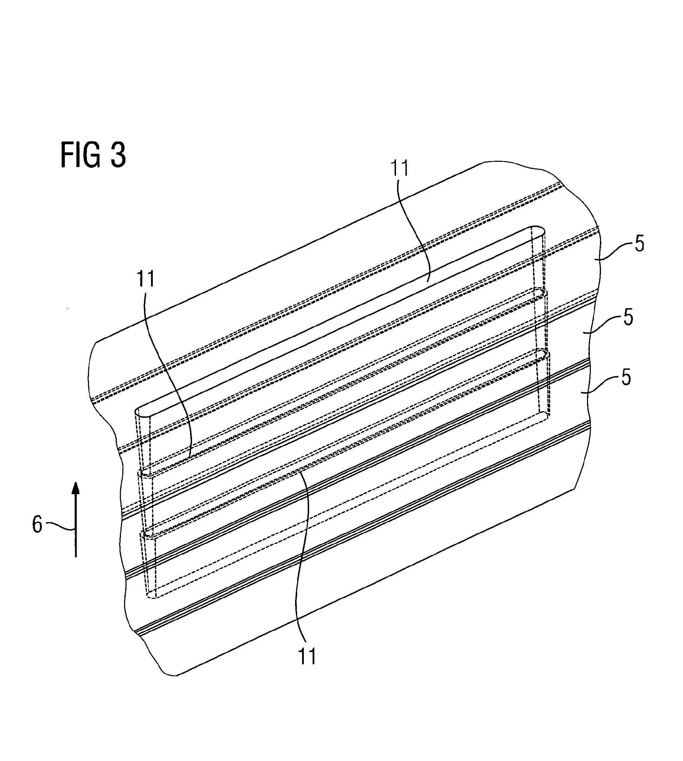

In der Figur 3 ist eine perspektivische Ansicht von übereinander angeordneten Leiterstäben mit einer vergrößerten Darstellung von einzelnen Kühlungsschlitzen 11 gezeigt.

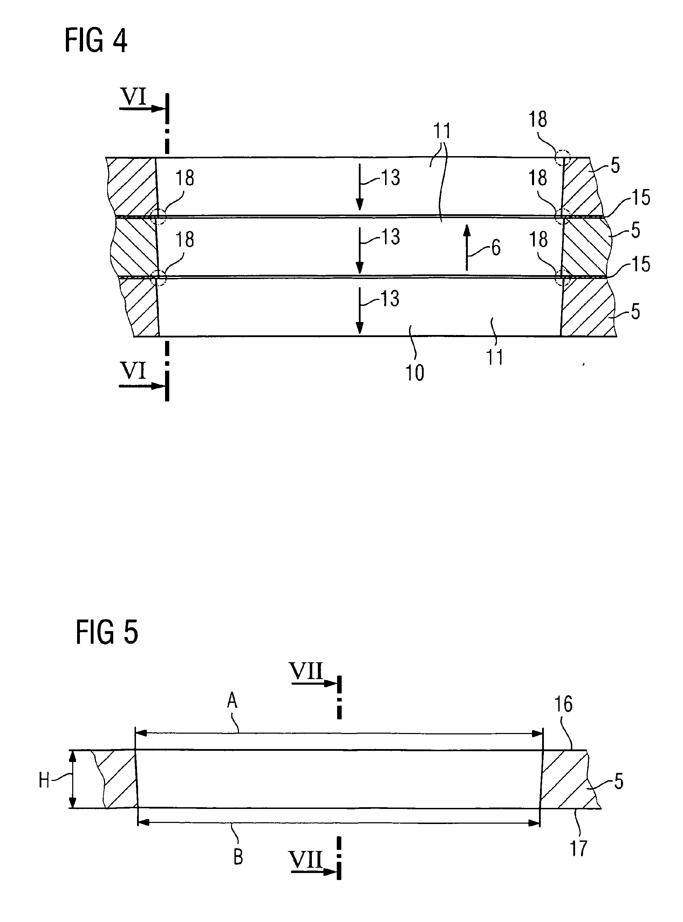

Die Figur 4 zeigt eine Querschnittsansicht eines Teils von übereinanderliegenden Leiterstäben 5 mit einer Darstellung der Kühlungsschlitze 11. Die Kühlungsschlitze 11 werden in einer Tiefenrichtung 13, die im Wesentlichen der radialen Richtung 6 entspricht, derart ausgebildet, dass die Kühlungsschlitze zumindest abschnittsweise kontinuierlich verjüngt oder erweitert ausgebildet sind. Die Figuren 4 bis 8 zeigen einen verjüngt verlaufenden Kühlungsschlitz. Der Übersichtlichkeit wegen wurde auf die Darstellung eines erweitert verlaufenden Kühlungsschlitzes verzichtet. Die Tiefenrichtung 13 verläuft im Wesentlichen von einer Rotoroberfläche 14 zur nicht dargestellten Rotationsachse. In den Kühlungsschlitzen 11 ist dadurch ein radialer Kühlungspfad 10 gebildet, der im Wesentlichen dadurch entsteht, dass die einzelnen Leiterstäbe 5 übereinander angeordnet sind und die einzelnen Kühlungsschlitze 11 übereinander den radialen Kühlungspfad 6 bilden. Zwischen den Leiterstäben 5 ist in radialer Richtung 6 eine Isolation 15 angeordnet.

Die Figur 5 zeigt eine Darstellung eines einzelnen Leiterstabes 5 mit einem Kühlungsschlitz 11. Der Kühlungsschlitz 11 weist an seiner oberen Oberfläche 16 eine Länge A und an seiner gegenüberliegenden unteren Oberfläche 17 eine Länge B auf. Die Länge B ist kleiner als die Länge A. Das Verhältnis von B zu A könnte auch umgekehrt sein. Es kommt darauf an, ob es für die Kühlleistung vorteilhafter ist, einen sich verjüngenden oder erweiternden Kanal zu haben. Dieselbe Betrachtungsweise gilt auch für die Verhältnisse von C und D. Der Leiterstab 5 hat insgesamt eine Höhe H. An den Übergangsbereichen 18 zwischen den einzelnen Kühlungsschlitzen 11 der Leiterstäbe 5 entstehen stufenartige Hindernisse für das durch den Kühlungsschlitz 11 strömende Kühlmedium.

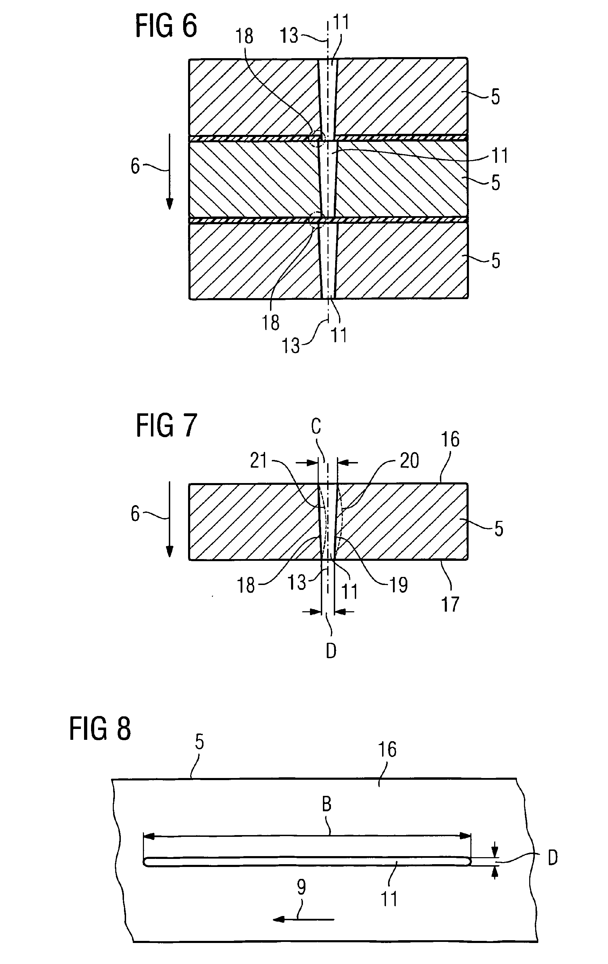

Die Figur 6 zeigt eine Querschnittsansicht entlang der Ebene B-B aus der Figur 4 der Leiterstäbe 5. Die Kühlungsschlitze 11 sind in der Tiefenrichtung 13 verjüngt ausgebildet, so dass in den Übergangsbereichen 18 Stufen auftreten.

Die Figur 7 zeigt einen Querschnitt entlang der Linie D-D aus Figur 5. Der Kühlungsschlitz 11weist an seiner oberen Oberfläche 16 eine Breite C und an seiner unteren Oberfläche 17 eine Breite D auf. Der Kühlungsschlitz 11 wird derart hergestellt, dass das Verhältnis ^{C}/_{D} zwischen ¹/_{0,5} und ¹/_{0,8} liegt, insbesondere kann das Verhältnis ^{C}/_{D} zwischen ¹/_{0,4} und ¹/_{0,9}, insbesondere bei ¹/_{2/3} liegen. Der Kühlungsschlitz 11 wird durch ein Wasserstrahlschneideverfahren hergestellt, was vergleichsweise günstig ist.

Alternativ kann der Kühlungsschlitz durch einen schräg angeordneten Fräser ausgebildet werden. Durch einen geradlinig verlaufenden Wasserstrahl wird durch solch ein Verfahren eine geradlinige Begrenzungswand 19 entstehen.

In einer ersten Ausführungsform ist die Begrenzungswand 19 der Kühlungsschlitze 11 in Tiefenrichtung 13 konkav und in einer zweiten Ausführungsform konvex ausgebildet.

In einer weiteren alternativen Ausführungsform kann sich die Form der Begrenzungswand 19 von Leiterstab 5 zu Leiterstab 5 ändern, beispielsweise kann ein erster Leiterstab 5 eine konkave Begrenzungsform und der nächste benachbarte Leiterstab eine konvexe Begrenzungswand aufweisen.

In einer weiteren alternativen Ausführungsform kann neben der Form eines Kühlungsschlitzes 11 auch eine konische Form der Kühlungsschlitze 11 aufweisen, wobei der Kühlungsschlitz 11 hier einer Bohrung entsprechen würde.

Die Figur 8 zeigt eine Draufsicht auf einen Leiterstab 5 mit Darstellung des Kühlungsschlitzes 11. Der Kühlungsschlitz 11 ist dabei länglich und geradlinig ausgebildet.

Eine konvexe Begrenzungswand ist durch das Bezugszeichen 21 mit Hilfe der gestrichelten Linie dargestellt. Die gestrichelte Linie mit dem Bezugszeichen 20 stellt eine konkave Begrenzungswand dar.

## Patentansprüche

1. Wicklung für eine elektrische Maschine (1),
mit mehreren übereinander angeordneten Leiterstäben (5), wobei die Leiterstäbe (5) jeweils einen in eine Tiefenrichtung (13) ausgebildeten Kühlungsschlitz (11) aufweisen, **dadurch gekennzeichnet, dass**
der Kühlungsschlitz (11) zumindest abschnittsweise in Tiefenrichtung (13) kontinuierlich verjüngt oder erweitert ausgebildet ist.

2. Wicklung nach Anspruch 1,
wobei der Kühlungsschlitz (11) durch zumindest eine in Tiefenrichtung (13) geradlinig verlaufende Begrenzungswand (19) begrenzt ist.

3. Wicklung nach Anspruch 1 oder 2,
wobei der Kühlungsschlitz (11) durch zumindest eine in Tiefenrichtung (13) konkav verlaufende Begrenzungswand (20) begrenzt ist.

4. Wicklung nach einem der vorhergehenden Ansprüche,
wobei der Kühlungsschlitz (11) durch zumindest eine in Tiefenrichtung (13) konvex verlaufende Begrenzungswand (21) begrenzt ist.

5. Wicklung nach einem der vorhergehenden Ansprüche,
wobei der Kühlungsschlitz (11) zumindest abschnittsweise ausgebildet ist.

6. Wicklung nach einem der vorhergehenden Ansprüche,
wobei ein Übergangsbereich (18) zwischen zwei Kühlungsschlitzen (11) von zwei benachbarten Leiterstäben (5) gestuft ausgebildet ist.

7. Wicklung nach einem der vorhergehenden Ansprüche,
wobei der Kühlungsschlitz (11) an der einen Oberfläche (16) die Breite C und an der gegenüberliegenden Oberfläche (17) die Breite D aufweist und
das Verhältnis ^{C}/_{D} zwischen ¹/_{0,5} und ¹/_{0,8} liegt.

8. Wicklung nach Anspruch 7,
wobei das Verhältnis ^{C}/_{D} zwischen ¹/_{0,4} und ¹/_{0,9}, insbesondere bei ¹/_{2/3} liegt.

9. Verfahren zur Herstellung eines Kühlungsschlitzes (11) eines Leiterstabes (5) für eine elektrische Maschine (1) unter Verwendung eines Wasserstrahlschneideverfahrens.
